# EUROPEAN PATENT APPLICATION

(11) **EP 2 654 260 A1**
(43) Date of publication of application: **23.10.2013**
(21) Application number: 12165042.8
(22) Date of filing: 20.04.2012
(51) Int. Cl.: H04L 29/06

(54) **Ip multimedia subsystem support for private branch exchanges**

(71) Applicant: Telefonaktiebolaget L M Ericsson (publ), 164 83 Stockholm (SE)
(72) Inventor: Hänström, Nils, SE-141 39 Huddinge (SE); Anulf, Andreas, SE-181 31 Lidingö (SE); Ignjatovic, Dusan, SE-12064 Stockholm (SE); Peharda, Kresimir, 40472 Düsseldorf (DE)
(74) Representative: Lind, Robert

(57) **Abstract**

According to an aspect of the present invention there is provided a method of providing support for multiple links between a Private Branch Exchange (PBX) and an IP Multimedia Subsystem (IMS). The method comprises, at an IMS Application Server (AS), configuring the AS with capacity information relating to each of the multiple links, receiving SIP call control messages relating to calls involving the PBX (C5, D5, E9, F9) and thereby maintaining usage information for each of the multiple links (C7, D7, E8, F8), the usage information indicating which of the multiple links is being used for each ongoing call involving the PBX. The method further comprises using the capacity information and the usage information relating to each of the multiple links to select one of the multiple links to carry an incoming call terminating at the PBX (E7, F7), and modifying SIP call control messages relating to the incoming call to ensure that the incoming call is carried by the selected link (E8, F8).

## Description

### Field of the Invention

This invention relates to IP Multimedia Subsystem (IMS) support for Private Branch Exchanges (PBX). More particularly, the invention relates to methods and apparatus that enable an IMS to support multiple links between a PBX and the IMS.

### Background to the Invention

IP Multimedia Subsystem (IMS) is the technology defined by the Third Generation Partnership Project (3GPP) to provide IP Multimedia services over mobile communication networks. IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. Other protocols are used for media transmission and control, such as Real-time Transport Protocol and Real-time Transport Control Protocol (RTP/RTCP).

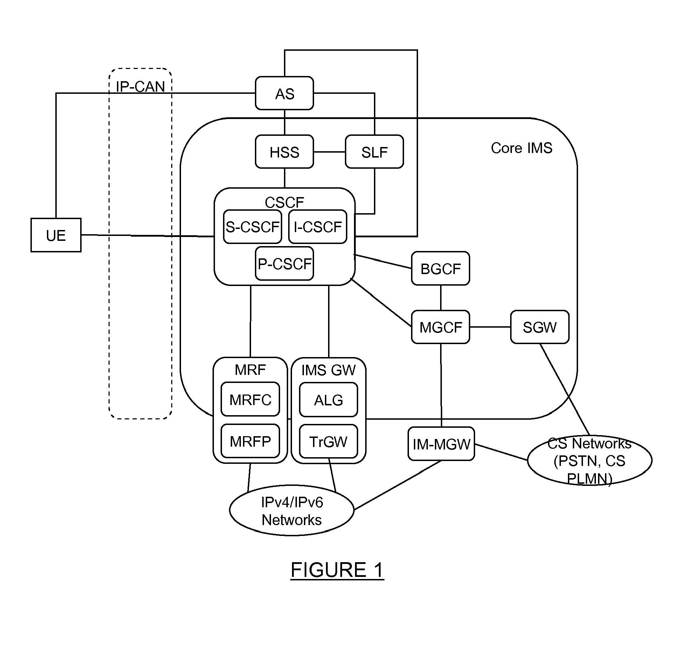

Figure 1 illustrates schematically an overview of the 3GPP/TISPAN IMS architecture. Call/Session Control Functions (CSCFs) operate as SIP proxies within the IMS core network, and interface with other entities such as Border Gateway Control Functions (BGCFs) and Media Resource Function Controllers (MRFCs) amongst others. A Proxy CSCF (P-CSCF) is the first point of contact within the IMS for a SIP terminal; a Serving CSCF (S-CSCF) provides services to the subscriber; an Interrogating CSCF (I-CSCF) identifies the correct S-CSCF and forwards to that S-CSCF a request received from a SIP terminal via a P-CSCF.

Application Servers (ASs) are provided for implementing IMS service functionality. Application Servers provide services to end users in an IMS system, and may be connected either as end-points over the 3GPP defined Ma interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment (or indeed for the purpose of any SIP method, session or non-session related). The IFCs are received by the S-CSCF from an HSS during the IMS registration procedure as part of a user's Subscriber Profile.

The IMS architecture was originally designed to enable Public Land Mobile Network (PLMN) operators to offer their subscribers multimedia services based on and built upon Internet applications, services and protocols. As such, the architecture was optimized for supporting mobile users where each user was individually configured, represented and given resources in the network independently of each other. Support for fixed networks, such as public switched telephone network (PSTN), has therefore only subsequently been added to the IMS specification in an ad-hoc manner. In particular, IMS support for Private Branch Exchanges (PBX), which interconnect the internal telephones of a private organization and connects them to the PSTN via trunk lines, has only recently been given proper consideration by the ETSI TISPAN and the SIP FORUM organisations.

ETSI TISPAN have specified the architectural, functional and protocol requirements for communication between private networks, referred to as Next Generation Corporate Networks (NGCN), and IP-based Next Generation Networks (NGN), such as the IMS. The capabilities that may be required by an NGN in order to support VoIP communications for end users of an NGCN are referred to as "Business Trunking". The SIP Forum has specified the SIPconnect 1.1 Technical Recommendation that builds on existing standards to define a method for interconnection between IP-PBXs (i.e. that support VoIP calls) and VoIP service provider networks using SIP signalling. SIPconnect 1.1 specifies the reference architecture, required protocols and features, and implementation rules necessary for communication between IP-PBXs and VoIP service providers. These capabilities are referred to as "SIP trunking".

Whilst there are technical differences between Business Trunking and SIPconnect 1.1 they do share some high level principles, including:
- A PBX may be dynamically registers its contact information with the VoIP service provider network using the SIP REGISTER mechanism. For example, SIPconnect 1.1 makes use of the mechanism in IETF RFC 6140 to achieve multiple registrations using a single REGISTER transaction, which is an addition to standard RFC3261 procedures
- In the VoIP service provider network, the identities of the end users behind the PBX are associated with the registered PBX identity by provisioning (i.e. are preconfigured in the subscriber profile associated with PBX identity). As a result, after registration of the PBX, the end user identities are also associated with the contact that was registered by the PBX.

However, neither SIPconnect 1.1 nor Business Trunking consider the possibility that a PBX may require multiple links/connections to a VoIP service provider network, and therefore neither SIPconnect 1.1 nor Business Trunking provide mechanisms that enable a VoIP service provider network to support a PBX having multiple links/connections to the network. In particular, when implementing either SIPconnect 1.1 or Business Trunking, if a PBX has multiple links/connections to a VoIP service provider network, then the network has no means to determine which of the multiple links/connections to use for an incoming call intended for an end user of the PBX.

### Summary

It is an aim of the present invention to provide a methods and apparatus for supporting a Private Branch Exchange (PBX) that requires multiple connections/links to a VoIP service provider network provided by an IP Multimedia Subsystem (IMS).

According to a first aspect of the present invention there is provided a method of providing support for multiple links between a Private Branch Exchange (PBX) and an IP Multimedia Subsystem (IMS). The method comprises, at an IMS Application Server, AS:
configuring the AS with capacity information relating to each of the multiple links;
receiving SIP call control messages relating to calls involving the PBX and thereby maintaining usage information for each of the multiple links, the usage information indicating which of the multiple links is being used for each ongoing call involving the PBX;
using the capacity information and the usage information relating to each of the multiple links to select one of the multiple links to carry an incoming call terminating at the PBX; and
modifying SIP call control messages relating to the incoming call to ensure that the incoming call is carried by the selected link.

Each of the multiple links may connect the PBX directly to the IMS, with each of the multiple links being provided by a separate IP interface of the PBX. Alternatively, each of the multiple links may connect the PBX to the IMS via one or more Integrated Access Devices (IAD) each of the multiple links being provided by a separate IAD.

The method may further comprise, for each of the multiple links, learning a contact address associated with the link, and for each outgoing call originating at the PBX, obtaining a contact address from a SIP call control message relating to the outgoing call, using the obtained contact address to identify a link of the multiple links that the SIP call control message relates to, and updating the usage information of the identified link in accordance with the SIP call control message.

The step of using the obtained contact address to identify a link of the multiple links that the SIP call control messages relate to may comprise comparing the contact address obtained from the SIP call control messages relating to the outgoing call with the stored contact address of each of the multiple links.

The step of updating the usage information in accordance with the SIP call control message may further comprise:
if a SIP call control message is a SIP INVITE message, updating the usage information to indicate that identified link is being used for the outgoing call; and
if a SIP call control message is a SIP BYE message, updating the usage information to indicate that identified link is no longer being used for the outgoing call.

The step of learning a contact address associated with the link may comprise receiving a SIP REGISTER message associated with the link and acquiring a contact address associated with the link from the SIP REGISTER message, and storing the learned contact address of the link.

The method may further comprise configuring the AS to store, for each of the multiple links, an IMS Public User Identity (IMPU) associated with the link, identifying a link of the multiple links that the received SIP REGISTER message relates to by comparing an IMPU received in the SIP REGISTER message with the stored IMPUs, and storing the learned contact address in association with the stored IMPU.

The contact address relating to the outgoing call may be obtained from a Via header field of the SIP call control message, and the learned contact address may be acquired from the Via header field of the SIP REGISTER message.

The method may further comprise, for each of the multiple links, learning a Universally Unique Identifier (UUID) associated with the link, and for each incoming call terminating at the PBX, determining the UUID associated with the link that has been selected for the incoming call, inserting the UUID into a SIP call control message relating to the incoming call and thereby ensuring that the incoming call will be carried by the selected link, and updating the usage information accordingly.

The step of learning a UUID associated with the link may comprise receiving a SIP REGISTER message associated with the link, and acquiring a UUID associated with the link from the SIP REGISTER message, and storing the learned UUID of the link. The learned UUID may be acquired from a sip.instance media feature tag included in a Contact header field of the SIP REGISTER message. An Accept-Contact header field may be inserted into a SIP INVITE message initiating the incoming call, and a value of the Accept-Contact header field is set to the UUID of the selected link.

According to a second aspect of the present invention there is provided an IMS AS configured to provide support for multiple links between a PBX and the IMS. The apparatus comprises:
a memory configured to store capacity information and usage information relating to each of the multiple links, the usage information indicating which of the multiple links is being used for each ongoing call involving the PBX;
a receiver configured to receive SIP call control messages relating to calls involving the PBX;
a processor configured to use the received SIP call control messages to maintain the usage information for each of the multiple links, to use the overall capacity information and the usage information to select one of the multiple links that is to be used for an incoming call terminating at the PBX, and to modify a SIP call control message relating to the incoming call to ensure that the incoming call is carried by the selected link; and
a transmitter configured to send the modified SIP call control message towards the PBX.

The receiver may be configured to interface directly with multiple IP interfaces of the PBX, each of the multiple links being provided by a separate IP interface of the PBX. Alternatively, the receiver may be configured to interface one or more Integrated Access Devices (IAD), each of the multiple links being provided by a separate IAD.

The processor may be further configured to:
for each of the multiple links, learn a contact address associated with the link; and
for each outgoing call originating at the PBX, obtain a contact address from SIP call control messages relating to the outgoing, use the obtained contact address to identify a link of the multiple links that the SIP call control message relates to, and update the usage information of the identified link in accordance with the SIP call control message.

The processor may be further configured to compare the contact address obtained from the SIP call control messages relating to the outgoing call with the stored contact address of each of the multiples links.

In order to update the usage information in accordance with the SIP call control message the processor may be configured to:
if a SIP call control message is a SIP INVITE message, update the usage information to indicate that identified link is being used for the outgoing call; and
if a SIP call control message is a SIP BYE message, update the usage information to indicate that identified link is no longer being used for the outgoing call.

The receiver may be further configured to receive a SIP REGISTER message associated with the link, and the processor may be further configured to learn a contact address associated with the link from the SIP REGISTER message and to store the learned contact address of the link in the memory.

The memory may be further configured to store, for each of the multiple links, an IMS Public User Identity, IMPU, associated with the link, and the processor may be further configured to identify to which of the multiple links a received SIP REGISTER message relates by comparing an IMPU received in the SIP REGISTER message with the stored IMPUs and to store the learned contact address in association with the stored IMPU in the memory. The processor may be configured to obtain the contact address relating to the outgoing call from a Via header field of the SIP call control messages, and to acquire the learned contact address from the Via header field of the SIP REGISTER message.

The processor may be further configured to:
for each of the multiple links, learn a Universally Unique Identifier, UUID, associated with the link; and
for each incoming call terminating at the PBX, determine the UUID associated with the link that has been selected for the incoming call, insert the UUID into a SIP call control message relating to the incoming call and thereby ensure that the incoming call will be carried by the selected link, and update the usage information accordingly.

The receiver may be further configured to receive a SIP REGISTER message associated with the link, and the processor may be further configured to acquire a UUID associated with the link from the SIP REGISTER message and to store the learned UUID of the link in the memory. The processor may be further configured to acquire the learned UUID from a sip.instance media feature tag included in a Contact header field of the SIP REGISTER message. The processor may be further configured to insert an Accept-Contact header field into a SIP INVITE message initiating the incoming call, and to set a value of the Accept-Contact header field to the UUID of the selected link.

According to a third aspect of the present invention there is provided a method for enabling an IMS to support multiple links between a PBX and the IMS. The method comprises, at a node configured to enable end users of the PBX to connect to the IMS:
storing a Universally Unique Identifier, UUID, for each of one or more interfaces providing a link to the IMS;
generating a SIP REGISTER message for registering an interface of the one or more interfaces with the IMS and including the UUID of the interface in the SIP REGISTER message; and
sending the SIP REGISTER message to the IMS.

The node may be an IP PBX connecting the end users to the IMS. Alternatively, the node may be an IAD connecting a circuit-switched PBX to the IMS.

The UUID of the interface may be included as the value of a sip.instance media feature tag within a Contact header field of the SIP REGISTER message.

According to a fourth aspect of the present invention there is provided an apparatus configured to enable end users of a PBX to connect to an IMS. The apparatus comprises
one or more interfaces configured to provide a link to the IMS;
a memory configured to store a Universally Unique Identifier, UUID, for each of the one or more interfaces;
a processor configured to generate a SIP REGISTER message for registering an interface of the one or more interfaces with the IMS, and to include the UUID of the interface in the SIP REGISTER message; and
a transmitter for sending the SIP REGISTER message to the IMS.

The apparatus may be configured to operate as an IP PBX connecting end users to the IMS. Alternatively, the apparatus may be configured to operate as an Integrated Access Devices, IAD, connecting a circuit-switched PBX to the IMS.

The processor may be configured to include the UUID of the interface as the value of a sip.instance media feature tag included within a Contact header field of the SIP REGISTER message.

### Brief Description of the Drawings

Some embodiments of the present invention will now be described in detail with reference to the accompanying drawings, in which:
Figure 1 illustrates schematically an overview of the 3GPP/TISPAN IMS architecture;
Figure 2 illustrates schematically an IP-PBX having multiple connections/links to an IMS;
Figure 3 illustrates schematically a CS PBX having multiple connections/links to an IMS via multiple IADs;
Figure 4 illustrates schematically an IP-PBX having multiple connections/links to an IMS that includes a Business Trunking AS (BTAS);
Figure 5 illustrates schematically a CS PBX having multiple connections/links to an IMS that includes a BTAS;
Figure 6 illustrates an example of the data stored in a Home Subscriber Server (HSS) for the IMS subscription of a CS PBX;
Figure 7 illustrates an example of the data stored in a Home Subscriber Server (HSS) for the IMS subscription of such an IP-PBX;
Figure 8 illustrates an example of the data stored in the BTAS for a CS PBX;
Figure 9 illustrates an example of the data stored in the BTAS for an IP-PBX;
Figure 10 illustrates an example signalling flow diagram illustrating the process of an IMS registration of an IAD that interconnects a CS PBX to the IMS;
Figure 11 illustrates an example signalling flow diagram illustrating the process of an IMS registration of an IP-PBX that has multiple connections to the IMS;
Figure 12 illustrates an example signalling flow diagram illustrating the process of an IAD initiating an originating/outgoing call on behalf of the CS PBX;
Figure 13 illustrates an example signalling flow diagram illustrating the process of an IP-PBX initiating an originating/outgoing call;
Figure 14 illustrates an example signalling flow diagram illustrating the process of implementing a terminating/incoming call intended for an end user of the CS PBX;
Figure 15 illustrates an example signalling flow diagram illustrating the process of implementing a terminating/incoming call intended for an end user of the IP-PBX;
Figure 16 illustrates schematically an example of a BTAS suitable for implementing the methods described herein; and
Figure 17 illustrates schematically an example of a node configured to enable end users of a PBX to connect to the IMS in accordance with the methods described above.

### Detailed Description of Certain Embodiments

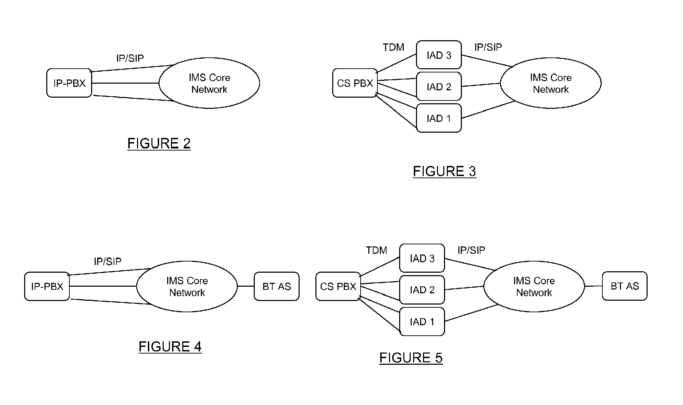

It has been recognised here that there are a number of reasons why it may be required or desired that a PBX have multiple links/connections to a VoIP service provider network. For example, an IP-PBX that supports IP/SIP for VoIP calls, and can therefore register directly with VoIP service provider network, may require multiple connections/links (e.g. multiple IP connections each having a different IP address and/or port number) to the VoIP service provider network (e.g. such that the IP-PBX has multiple interface cards for connecting to the network) in order to support redundancy. Figure 2 illustrates schematically an IP-PBX having multiple connections/links to a VoIP service provide network provided by an IMS.

With regards to circuit switched PBXs (e.g. that support E1/T1/BRI links), a CS PBX can connect to a VoIP service provider network by way of an Integrated Access Device (IAD) that interworks between TDM circuit switching and SIP. For example, TISPAN defines a Customer Network Gateway (CNG) that provides IAD functionality for a NGCN/PBX. In such circumstances, there are a number of reasons why more than one IAD may be required in order to connect the CS PBX to a VoIP service provider network. For example, more than one IAD will be required if an individual IAD does not have a sufficient number of interfaces to support all of the trunk interfaces (e.g. a number of E1, T1 or BRI links) of the CS PBX. In addition, more than one IAD may be desired in order to provide robustness, such that if one of the IADs fails, the CS PBX can still connect to the VoIP service provider network. Furthermore, the use of more than one IAD provides for increased link capacity. For example, if an IAD connects to the VoIP service provider network using a DSL link of limited capacity, a large PBX will require more then one DSL link in order to the carry the required volume of traffic, and this will probably mean that more than one IAD will be required (unless a single IAD can support multiple access links). Figure 3 illustrates schematically a CS PBX having multiple connections/links to a VoIP service provider network provided by an IMS via multiple IADs.

Having recognised that a PBX may require multiple links/connections to a VoIP service provider network, it has also been recognised that neither SIPconnect 1.1 nor Business Trunking consider this possibility. Accordingly, there will now be described methods and apparatus for supporting a Private Branch Exchange (PBX) that requires multiple connections/links to a VoIP service provider network. According to the methods described herein, an IP Multimedia Subsystem (IMS) that provides a VoIP service for a PBX is enhanced to include an IMS Application Server (AS) that is configured to provide Call Admission Control (CAC) and load sharing for the multiple connections/links of the PBX. This IMS AS is referred to herein as a Business Trunking Application Server (BTAS).

To implement this method, the BTAS is provisioned/pre-configured with capacity information relating to each of the multiple connections/links of the PBX, and the IMS is configured to forward SIP call control messages relating to the PBX to the BTAS. The BTAS is configured to use the received SIP call control messages to maintain a record of which of the multiple connections/links is being used for each ongoing call involving the PBX, and to use this record together with the capacity information to select one of the multiple links for use by an incoming call to the PBX. The BTAS is further configured to modify SIP call control messages relating to the incoming call to ensure that the incoming call is carried by the selected connection/link. Figure 4 illustrates schematically an IP-PBX having multiple connections/links to a VoIP service provider network provided by an IMS in which a BTAS is included to provide CAC and load sharing. Similarly, figure 5 illustrates schematically a CS PBX having multiple connections/links to a VoIP service provider network provided by an IMS via multiple IADs in which the IMS includes a BTAS to provide CAC and load sharing.

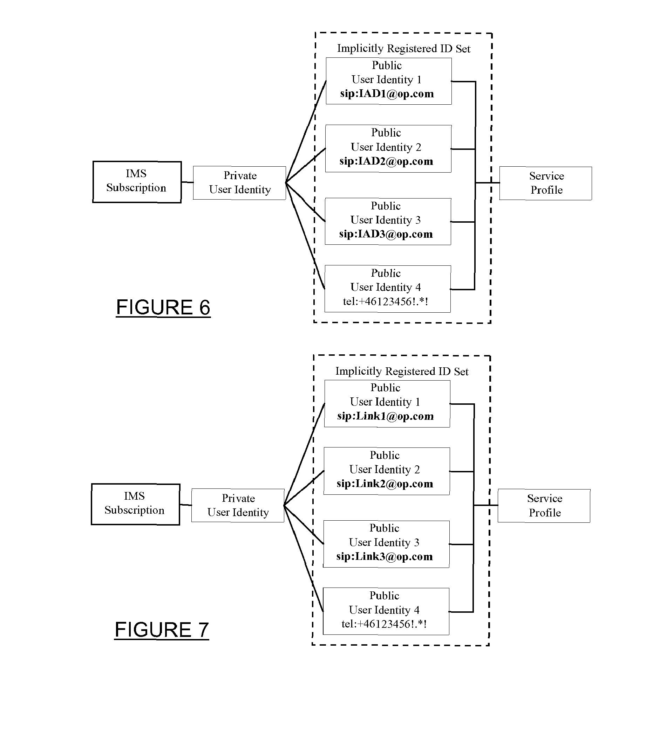

By way of example, if the CS PBX illustrated in Figure 5 has five E1 links, and each IAD that can connect the CS PBX to the IMS can only support two E1 links, then three IADs are required, IAD1, IAD 2 and IAD 3. IAD 1 and IAD 2 each interconnect two of the five E1 links, whilst IAD 3 interconnects the remaining one E1 link. In such circumstances, the CS PBX will have a subscription with the IMS in which each IAD has it's own, individual IMS Public User Identity (IMPU), each of which may or may not share the same IMS Private User Identity (IMPI). The end users of the CS PBX are then represented by one or more wildcard IMPUs. Figure 6 illustrates an example of the data stored in a Home Subscriber Server (HSS) for the IMS subscription of such a CS PBX.

Similarly, for the IP-PBX illustrated in Figure 4, the IP-PBX will have a subscription with the IMS in which each connection/link (e.g. Link 1, Link 2 and Link 3) has it's own, individual IMS Public User Identity (IMPU), each of which may or may not share the same IMS Private User Identity (IMPI). The end users of the IP-PBX are then represented by one or more wildcard IMPUs. Figure 7 illustrates an example of the data stored in a Home Subscriber Server (HSS) for the IMS subscription of such an IP-PBX.

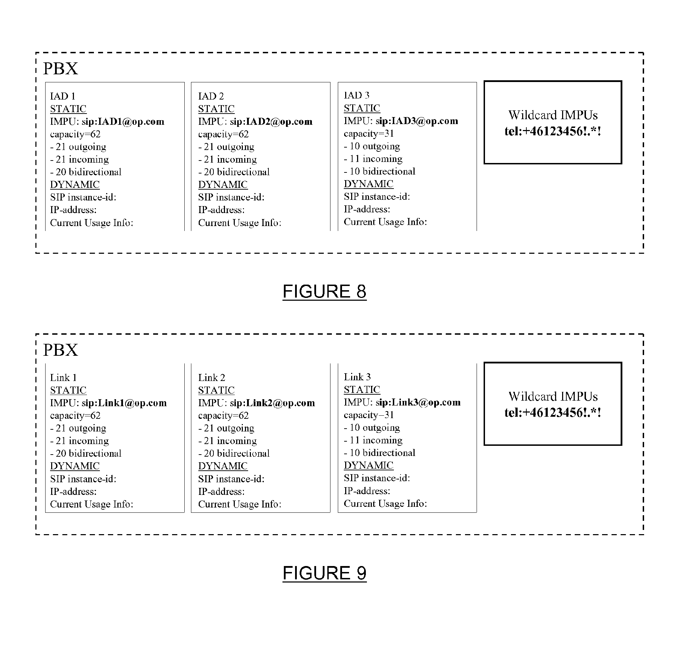

The BTAS will also be provisioned with the information relating to the PBX. This PBX information includes static information such as the wildcard IMPU(s) of the PBX, the IMPU of each IAD/link and the overall capacity of each of IAD/link. The PBX will also be provided with dynamic information relating to the current status of the PBX, such as the dynamic addressing information of each IAD/link and the currently available capacity (e.g. usage information) of each of IAD/link, in accordance with the procedures described below. Figure 8 illustrates an example of the data stored in the BTAS for the CS PBX of Figure 5. Figure 9 illustrates an example of the data stored in the BTAS for the IP-PBX of Figure 4.

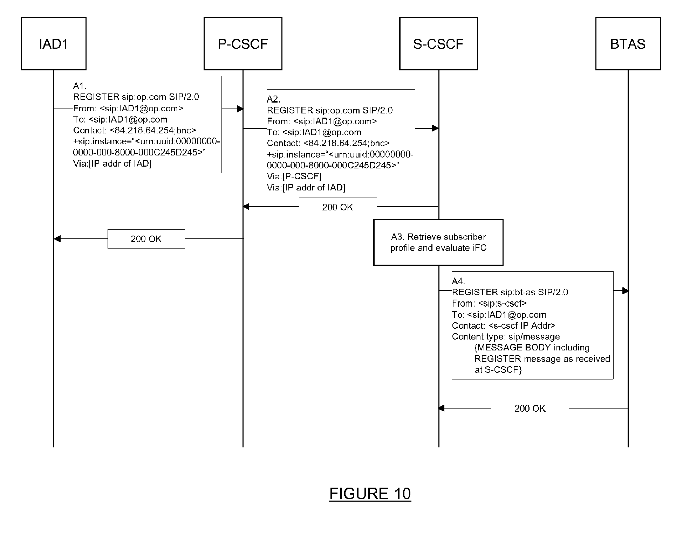

Figure 10 illustrates an example signalling flow diagram illustrating the process of an IMS registration of an IAD that interconnects a CS PBX to the IMS. The steps performed are as follows:
A1. The IAD (IAD1) generates and sends a SIP REGISTER message to the IMS Core Network in order to register itself with the IMS. The IAD includes a "sip.instance" media feature tag in the Contact header field of the SIP REGISTER message. The value of the "sip.instance" media feature tag includes a SIP instance-id in the form of a Universally Unique IDentifier (UUID) URN that uniquely identifies the IAD. The IAD also includes it's contact address (i.e. IP address or URL) in the value of the Via header field.
A2. The SIP REGISTER message is received by a P-CSCF of the IMS and is routed on to an S-CSCF via an I-CSCF.
A3. The S-CSCF uses the IMPU of the IAD that is included in the To header field to retrieve the associated subscriber profile from the HSS, and evaluates the iFC included in the subscriber profile. The subscriber profile associated with the IMPU of the IAD is configured to include iFC that cause a third party registration. The S-CSCF thereby determines that a third-party registration should be performed with a BTAS.
A4. The S-CSCF therefore sends a third-party SIP REGISTER message to the BTAS to inform the BTAS of the registration of the IAD. The original SIP REGISTER message (i.e. sent by the IAD) is included in the body of the third-party SIP REGISTER message.
A5. The BTAS receives the third-party SIP REGISTER message from the S-CSCF and processes the third-party SIP REGISTER message. The BTAS therefore identifies the IAD from the IMPU included in To header field of the SIP REGISTER message included in the body of the third-party SIP REGISTER message. The BTAS also determines the SIP instance-id of the IAD from the Contact header field of the SIP REGISTER message included in the body of, and the address of the IAD from the first Via header of the SIP REGISTER message included in the body. The BTAS then updates the PBX related information by storing the SIP instance-id and the contact address of the IAD in the dynamic information associated with IAD.

By configuring the HSS with a subscriber profile associated with the IMPU of the IAD that includes iFC that cause a third party registration to the BTAS, the method provides that the BTAS can learn a unique identifier for the IAD and the contact address of the IAD at registration of the IAD with IMS. The unique identifier for the IAD and the contact address of the IAD can then be stored in the dynamic information maintained by the BTAS to enable the BTAS to perform CAC and load sharing for any subsequently established sessions.

If the IAD does not have the functionality required to include a "sip.instance" media feature tag, then a terminal adapter function, residing in either the P-CSCF or S-CSCF, shall include the "sip.instance" media feature tag on behalf of the IAD. The "sip.instance" media feature tag should preferably be based on contents of the SIP REGISTER message to avoid terminal adaptor provisioning.

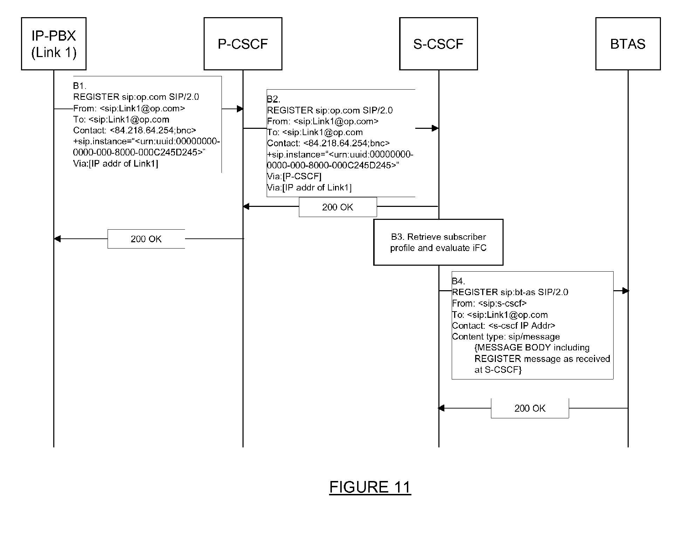

Similarly, Figure 11 illustrates an example signalling flow diagram illustrating the process of an IMS registration of an IP-PBX that has multiple connections to the IMS. Steps B1 to B4 are essentially the same as corresponding steps A1 to A4 described above with reference to Figure 10.

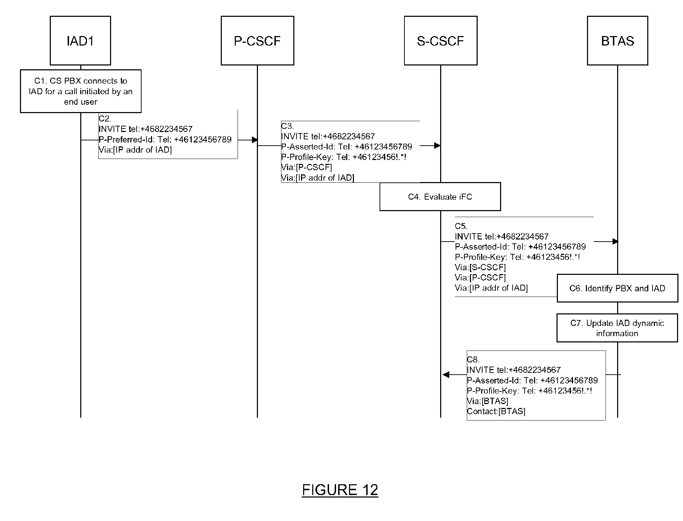

Figure 12 illustrates an example signalling flow diagram illustrating the process of an IAD initiating an originating/outgoing call on behalf of the CS PBX. The steps performed are as follows:
C1. An end user of the CS PBX initiates an outgoing call. The CS PBX selects one of multiple available links to use for the outgoing call and therefore connects to one of several IADs that interconnect the CS PBX with the IMS. The IADs have already registered with the IMS according to the procedure outlined above with reference to Figure 8.
C2. The IAD therefore generates and sends a SIP INVITE message to the IMS Core Network in order to initiate an outgoing call on behalf of the CS PBX. The Tel URI of the end user is included in the P-Preferred-ld header field of the INVITE message, and the address of the IAD is included in the Via header field.
C3. The SIP INVITE message is received by the P-CSCF of the IMS. The P-CSCF replaces the received P-Preferred-ld header field with a P-Asserted-ld header field including the same content (i.e. the Tel URI of the end user). The P-CSCF also inserts a P-Profile-Key header field into the SIP INVITE message and includes the wildcard IMPU that matches the end users of the PBX as the value of the P-Profile-Key header. By including this wildcard IMPU in the P-Profile-Key header field other IMS proxy nodes can use this key to query the HSS for the subscriber profile associated with the end user. The SIP INVITE message is then routed on to the S-CSCF. The P-CSCF will have obtained the wildcard IMPU from a P-Associated-URI header of the 200 OK response received to during the registration procedure.
C4. The S-CSCF uses the wildcard IMPU included in the P-Profile-Key header field to identify the subscriber profile and evaluates the iFC included in the subscriber profile. The S-CSCF thereby determines that the SIP INVITE message should be sent to the BTAS.
C5. The S-CSCF therefore sends the SIP INVITE message to the BTAS.
C6. The BTAS receives the SIP INVITE message from the S-CSCF and processes the SIP INVITE message. The BTAS uses the value of the P-Profile-Key header to identify the originating PBX, as the P-Profile-Key header includes the wildcarded IMPU representing the end users of the PBX that is stored in the PBX information provisioned at the BTAS. The BTAS also identifies the IAD by comparing the value of the Via headers with the addresses learned during registration of the IADs and that are stored in the PBX information.
C7. The BTAS therefore updates the dynamic information of the IAD to indicate that one of the available outgoing channels of the IAD is being used for this outgoing call. The BTAS is therefore able to maintain a record of which of the multiple connections/links is being used for each ongoing outgoing call involving the PBX.
C8. The BTAS acts as a back-to-back user agent (B2BUA) and therefore terminates the INVITE request locally and generates a new INVITE request. As the BTAS acts as a BTAS it ensures that subsequent requests within the SIP dialog are routed via the BTAS. In doing so, the BTAS ensures that a SIP BYE message for the call session is also routed via the BTAS, such that the BTAS can determine when the call session ends. The BTAS can therefore update the dynamic information when the outgoing channel is no longer being used for this outgoing call. The BTAS is therefore able to maintain a record of which of the multiple connections/links is being used for each ongoing outgoing call involving the PBX.

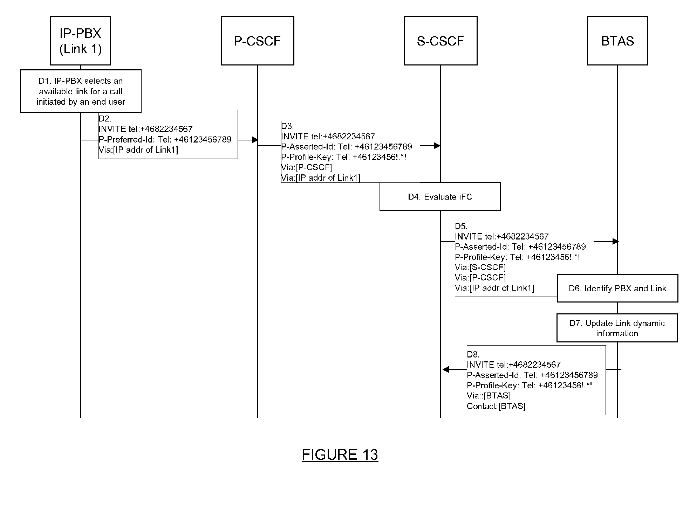

Similarly, Figure 13 illustrates an example signalling flow diagram illustrating the process of an IP-PBX initiating an originating/outgoing call. Steps D1 to D8 are essentially the same as corresponding steps C1 to C8 described above with reference to Figure 12.

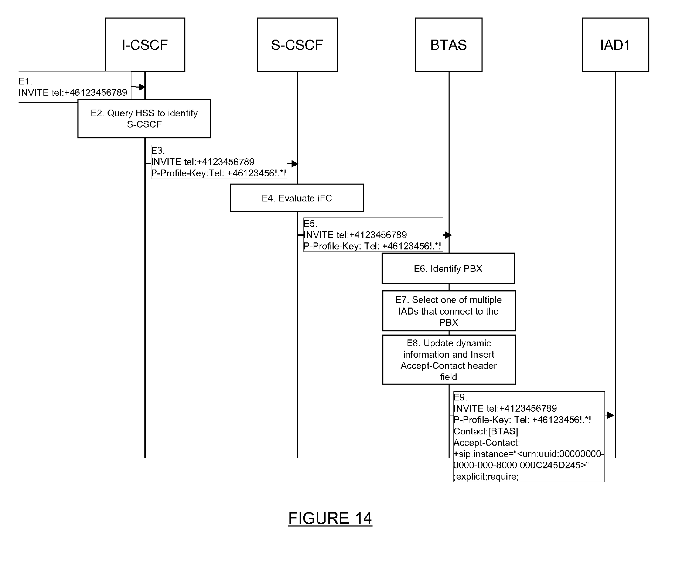

Figure 14 illustrates an example signalling flow diagram illustrating the process of a terminating/incoming call intended for an end user of the CS PBX. The steps performed are as follows:
E1. A SIP INVITE message requesting establishment of a call with an end user of the CS PBX is received by an I-CSCF of the IMS. The Tel URI of the end user is included in as the request URI.
E2. The I-CSCF queries the HSS using the Tel URI to obtain the address of the S-CSCF currently allocated to the end user. The HSS returns the address of the S-CSCF and also includes the wildcard IMPU that it has matched to the Tel URI. The I-CSCF therefore inserts a P-Profile-Key header field into the SIP INVITE message and includes the wildcard IMPU as the value.
E3. The SIP INVITE message is then routed on to the S-CSCF.
E4. The S-CSCF uses the wildcard IMPU included in the P-Profile-Key header field to identify the subscriber profile and evaluates the iFC included in the subscriber profile. The S-CSCF thereby determines that the SIP INVITE message should be sent to the BTAS.
E5. The S-CSCF therefore sends the SIP INVITE message to the BTAS.
E6. The BTAS receives the SIP INVITE message from the S-CSCF and processes the SIP INVITE message. The BTAS uses the value of the P-Profile-Key header to identify the terminating PBX, as the P-Profile-Key header includes the wildcarded IMPU representing the end users of the PBX that is stored in the PBX information provisioned at the BTAS.
E7. The BTAS then uses the stored PBX information to select which one of several IADs that interconnect the CS PBX with the IMS should be used to carry the incoming call. In this regard, the BTAS will have maintained a record of which of the IADs is being used for each ongoing outgoing call involving the PBX, in accordance with the procedure outlined above with reference to Figure 9. The BTAS will also have maintained a record of which of the IADs is being used for each ongoing incoming call involving the PBX (i.e. as selected by the BTAS). The BTAS will therefore be able to use this record, together with the capacity information of each IAD, to select which of the IADs should be used for this incoming call to the PBX. This selection of an IAD can also make use of CAC and load sharing algorithms.
E8. Once the BTAS has selected one of the several IADs that interconnect the CS PBX with the IMS, the BTAS therefore updates the dynamic information of the IAD to indicate that the selected IAD is being used for this incoming call. The BTAS is therefore able to maintain a record of which of the multiple connections/links is being used for each ongoing incoming call involving the PBX. The BTAS modifies the SIP INVITE message to include an Accept-Contact header field with the value being set to the SIP instance-ID of the selected IAD (i.e. that was stored at registration), and includes both the "explicit" and "require" parameters. The Accept-Contact header field is used to specify preferences regarding the nodes that a SIP message should be routed to, and the presence of the "explicit" and "require" parameters specifies that a proxy can only forward the SIP message to contacts that match the specified preferences. The BTAS acts as a back-to-back user agent (B2BUA) and therefore terminates the INVITE request locally and generates a new INVITE request. As the BTAS acts as a BTAS it ensures that a SIP BYE message for the call session is routed via the BTAS, such that the BTAS can determine when the call sessions ends. The BTAS can therefore update the dynamic information when the incoming channel is no longer being used for this incoming call. The BTAS is therefore able to maintain a record of which of the multiple connections/links is being used for each ongoing outgoing call involving the PBX.
E9. The target selection mechanism in S-CSCF then selects the IAD whose SIP instance-ID matches that included in the Accept-Contact header field, such that the SIP INVITE message reaches the IAD selected by the BTAS.

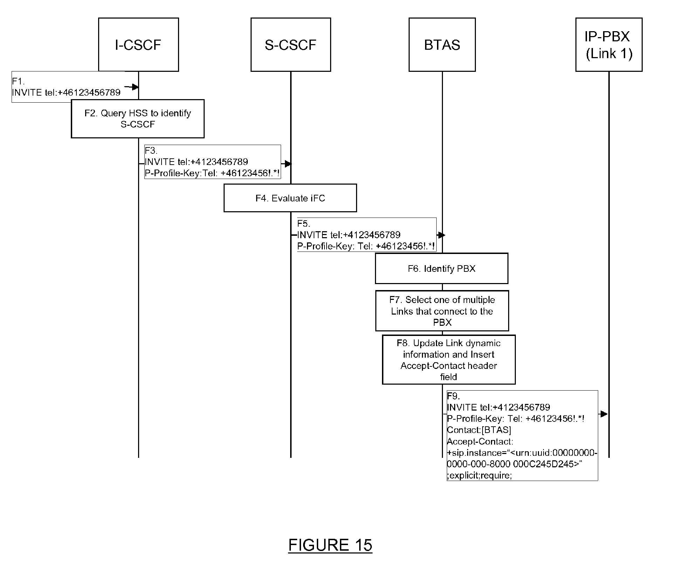

Similarly, Figure 15 illustrates an example signalling flow diagram illustrating the process of an terminating/incoming call intended for an end user of the IP-PBX. Steps F1 to F9 are essentially the same as corresponding steps E1 to E9 described above with reference to Figure 14.

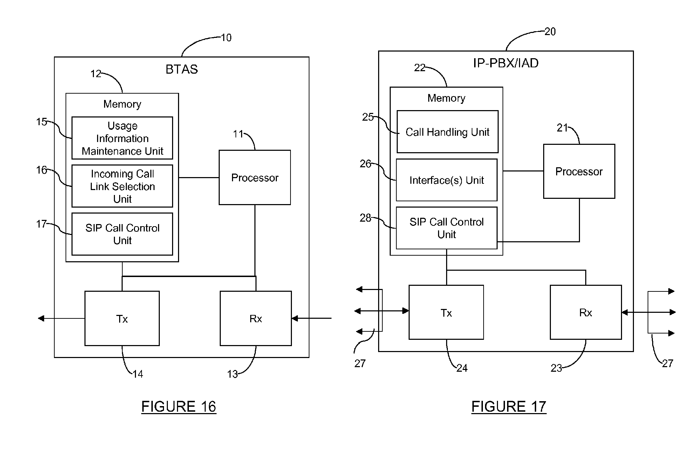

Figure 16 illustrates schematically an example of a BTAS 10 for implementing Call Admission Control (CAC) and load sharing for multiple connections/links of between a PBX an IMS in accordance with the methods described above. The BTAS 10 can be implemented as a combination of computer hardware and software and comprises a processor 11, a memory 12, a receiver 13, and a transmitter 14. The memory 12 stores the various programs/executable files that are implemented by the processor 11, and also provides storage for any required data. For example, the memory 12 could be configured to store capacity and usage information relating to each of the multiple links together with a contact address and UUID for each of the multiple links. The programs/executable files stored in the memory 12, and implemented by the processor 11, can include a usage information maintenance unit 15, an incoming call link selection unit 16, and a SIP call control unit 17 configured to handle control of calls within IMS using SIP.

Figure 17 illustrates schematically an example of a node 20 configured to enable end users of a PBX to connect to the IMS accordance with the methods described above. For example, the node 20 could be either an IP-PBX connecting the end users to the IMS, or the node 20 could be an IAD connecting a CS PBX to the IMS. The node 20 can be implemented as a combination of computer hardware and software and comprises a processor 21, a memory 22, a receiver 23, and a transmitter 24. The memory 22 stores the various programs/executable files that are implemented by the processor 21, and also provides storage for any required data. For example, the memory 22 could be configured to store a UUID for each of one or more interfaces that provide connections/links to the IMS. The programs/executable files stored in the memory 22, and implemented by the processor 21, can include a call handling unit 25 configured to handle call control within the organisation, an interface(s) unit 26 configured to implement one or more interfaces 27 between the node 20 and the IMS, and a SIP Protocol Unit 28 configured to handle control of calls within IMS using SIP.

The methods and apparatus described above enable support for multiple connections/links between a PBX and an IMS that provides a VoIP service provider network. In doing so, the methods and apparatus described above enable redundant link solutions to be implemented for both CS and IP-PBXs whilst allowing the PBX to be represented as one logical endpoint with regards to call routing (i.e. through the use of wildcarded IMPUs). The methods and apparatus described above also enable the implementation of Call Admission Control (CAC) and load sharing for the multiple connections/links of such a PBX.

Although the invention has been described in terms of preferred embodiments as set forth above, it should be understood that these embodiments are illustrative only. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. For example, in the illustrated example signalling flow diagrams described above, only those messages and headers that are of particular relevance are shown. Those skilled in the art will be aware those messages and headers that have not been included in this illustration. In addition, in the above described embodiments, the BTAS uses the capacity information and the usage information relating to each of the multiple links to select one of the multiple links to carry an incoming call terminating at the PBX. However, the BTAS could also make use of CAC and load sharing algorithms during this selection procedure. By of further example, in the above described embodiments, the BTAS has been described as acting as a B2BUA; however, it is also possible that the BTAS could be configured to act as a proxy

## Claims

1. A method of providing support for multiple links between a Private Branch Exchange, PBX, and an IP Multimedia Subsystem, IMS, the method comprising:
at an IMS Application Server, AS:
configuring the AS with capacity information relating to each of the multiple links;
receiving SIP call control messages relating to calls involving the PBX (C5, D5, E9, F9) and thereby maintaining usage information for each of the multiple links(C7, D7, E8, F8), the usage information indicating which of the multiple links is being used for each ongoing call involving the PBX;
using the capacity information and the usage information relating to each of the multiple links to select one of the multiple links to carry an incoming call terminating at the PBX (E7, F7); and
modifying SIP call control messages relating to the incoming call to ensure that the incoming call is carried by the selected link (E8, F8).

2. A method as claimed in claim 1, and further comprising:
for each of the multiple links, learning a contact address associated with the link;
for each outgoing call originating at the PBX, obtaining a contact address from a SIP call control message relating to the outgoing call (C5, D5), using the obtained contact address to identify a link of the multiple links that the SIP call control message relates to (C6, D6), and updating the usage information of the identified link in accordance with the SIP call control message (C7, D7).

3. A method as claimed in claim 2, wherein the step of using the obtained contact address to identify a link of the multiple links that the SIP call control messages relate to comprises:
comparing the contact address obtained from the SIP call control messages relating to the outgoing call with the stored contact address of each of the multiple links.

4. A method as claimed in any of claims 2 or 3, wherein the step of updating the usage information in accordance with the SIP call control message comprises:
if a SIP call control message is a SIP INVITE message, updating the usage information to indicate that identified link is being used for the outgoing call; and
if a SIP call control message is a SIP BYE message, updating the usage information to indicate that identified link is no longer being used for the outgoing call.

5. A method as claimed in any of claims 2 to 4, wherein the step of learning a contact address associated with the link comprises:
receiving a SIP REGISTER message associated with the link (A4, B4), and acquiring a contact address associated with the link from the SIP REGISTER message; and
storing the learned contact address of the link.

6. A method as claimed in claim 5, and further comprising:
configuring the AS to store, for each of the multiple links, an IMS Public User Identity, IMPU, associated with the link;
identifying a link of the multiple links that the received SIP REGISTER message relates to by comparing an IMPU received in the SIP REGISTER message with the stored IMPUs; and
storing the learned contact address in association with the stored IMPU.

7. A method as claimed in any preceding claim, and further comprising:
for each of the multiple links, learning a Universally Unique Identifier, UUID, associated with the link;
for each incoming call terminating at the PBX, determining the UUID associated with the link that has been selected for the incoming call, inserting the UUID into a SIP call control message relating to the incoming call (E8, F8) and thereby ensuring that the incoming call will be carried by the selected link, and updating the usage information accordingly (E8, F8).

8. An IP Multimedia Subsystem, IMS, Application Server, AS (10) configured to provide support for multiple links between a Private Branch Exchange, PBX, and the IMS, the apparatus comprising:
a memory (12) configured to store capacity information and usage information relating to each of the multiple links, the usage information indicating which of the multiple links is being used for each ongoing call involving the PBX;
a receiver (13) configured to receive SIP call control messages relating to calls involving the PBX;
a processor (11) configured to use the received SIP call control messages to maintain the usage information for each of the multiple links, to use the overall capacity information and the usage information to select one of the multiple links that is to be used for an incoming call terminating at the PBX, and to modify a SIP call control message relating to the incoming call to ensure that the incoming call is carried by the selected link; and
a transmitter (14) configured to send the modified SIP call control message towards the PBX.

9. An IMS Application Server (10) as claimed in claim 8, wherein the processor (11) is further configured to:
for each of the multiple links, learn a contact address associated with the link;
for each outgoing call originating at the PBX, obtain a contact address from SIP call control messages relating to the outgoing, use the obtained contact address to identify a link of the multiple links that the SIP call control message relates to, and update the usage information of the identified link in accordance with the SIP call control message.

10. An IMS Application Server (10) as claimed in claim 9, wherein the processor (11) is configured to compare the contact address obtained from the SIP call control messages relating to the outgoing call with the stored contact address of each of the multiples links.

11. An IMS Application Server (10) as claimed in any of claims 9 or 10, wherein in order to update the usage information in accordance with the SIP call control message the processor (11) is configured to:
if a SIP call control message is a SIP INVITE message, update the usage information to indicate that identified link is being used for the outgoing call; and
if a SIP call control message is a SIP BYE message, update the usage information to indicate that identified link is no longer being used for the outgoing call.

12. An IMS Application Server (10) as claimed in any of claims 9 to 11, wherein the receiver (13) is further configured to receive a SIP REGISTER message associated with the link, and the processor (11) is further configured to learn a contact address associated with the link from the SIP REGISTER message and to store the learned contact address of the link in the memory.

13. An IMS Application Server (10) as claimed in claim 9, wherein the memory (12) is further configured to store, for each of the multiple links, an IMS Public User Identity, IMPU, associated with the link, the processor (11) is further configured to identify to which of the multiple links a received SIP REGISTER message relates by comparing an IMPU received in the SIP REGISTER message with the stored IMPUs and to store the learned contact address in association with the stored IMPU in the memory.

14. An IMS Application Server (10) as claimed in any of claims 8 to 13, wherein the processor (11) is further configured to:
for each of the multiple links, learn a Universally Unique Identifier, UUID, associated with the link; and
for each incoming call terminating at the PBX, determine the UUID associated with the link that has been selected for the incoming call, insert the UUID into a SIP call control message relating to the incoming call and thereby ensure that the incoming call will be carried by the selected link, and update the usage information accordingly.

15. A method for enabling an IP Multimedia Subsystem, IMS, to support multiple links between a Private Branch Exchange, PBX, and the IMS, the method comprising:
at a node configured to enable end users of the PBX to connect to the IMS:
storing a Universally Unique Identifier, UUID, for each of one or more interfaces providing a link to the IMS;
generating a SIP REGISTER message for registering an interface of the one or more interfaces with the IMS and including the UUID of the interface in the SIP REGISTER message; and
sending the SIP REGISTER message to the IMS (A1, B1).

16. An apparatus (20) configured to enable end users of a Private Branch Exchange, PBX, to connect to an IP Multimedia Subsystem, IMS, the apparatus comprising:
one or more interfaces configured to provide a link to the IMS (27);
a memory (22) configured to store a Universally Unique Identifier, UUID, for each of the one or more interfaces;
a processor (21) configured to generate a SIP REGISTER message for registering an interface of the one or more interfaces with the IMS, and to include the UUID of the interface in the SIP REGISTER message; and
a transmitter (24) for sending the SIP REGISTER message to the IMS.
